# EUROPÄISCHE PATENTSCHRIFT

(11) **EP 1 736 049 B1**
(45) Veröffentlichungstag und Bekanntmachung des Hinweises auf die Patenterteilung: **05.08.2009**
(21) Anmeldenummer: 06007085.1
(22) Anmeldetag: 04.04.2006
(51) Int. Cl.: A01K 63/04

(54) **Innenfiltereinrichtung für Aquarien**
Filtering device for aquaria
Dispositif de filtration pour aquaria

(30) Priorität: 22.06.2005 DE 102005029201
(43) Veröffentlichungstag der Anmeldung: 27.12.2006
(73) Patentinhaber: JBL GmbH & Co. KG, 67141 Neuhofen (DE)
(72) Erfinder: Keppler, Rainer, Dr., 68766 Hockenheim (DE)
(74) Vertreter: Kesselhut, Wolf

(56) Entgegenhaltungen:
- EP-A2- 0 295 149
- WO-A-20/05053817
- DE-A1- 3 136 243

## Beschreibung

Die Erfindung betrifft eine Innenfiltereinrichtung für Aquarien zum Reinigen von Wasser gemäß dem Oberbegriff von Anspruch 1.

Um in einem Aquarium die erforderlichen Lebensbedingungen für Fische und sonstige Lebewesen über einen längeren Zeitraum zu gewährleisten, muss das Wasser fortlaufend von Schwebestoffen und anderen Verunreinigungen gereinigt werden. Hierfür sind aus dem Stand der Technik Innenfiltereinrichtungen bekannt, die innerhalb eines Aquariums angeordnet und abschnittsweise oder vollständig von Wasser umschlossen sind. Um den Platzbedarf einer solchen Innenfiltereinrichtung innerhalb eines Aquariums möglichst gering zu halten, hat es sich als vorteilhaft herausgestellt, in einem mit Ansaugöffnungen versehenen Gehäuse ein Filterelement aufzunehmen, in welchem ein Saugkanal angeordnet ist, der mit einem Ende strömungsmäßig mit einer Ansaugvorrichtung, insbesondere einer Pumpe, verbunden ist. Die Ansaugvorrichtung saugt hierbei das zu reinigende Wasser durch die Ansaugöffnungen und das Filterelement hindurch an, wobei Schwebstoffe und sonstige Verunreinigungen im Filterelement als Filtergut verbleiben. Beim Abschalten der Ansaugvorrichtung oder bei deren Entnahme aus dem Aquarium kann es hierbei vorkommen, dass sich das in dem Filterelement angesammelte Filtergut aus diesem löst und zusammen mit dem im Gehäuse enthaltenen Wasser über die Ansaugöffnungen wieder in das Aquarium zurück fließt.

DE-A-3 136 243 offenbart eine Innenfiltereinrichtung zum Reinigen von Wasser in Aquarien welche ein einen Gehäuseboden und einen Deckenbereich aufweisendes Gehäuse umfasst. Der Deckenbereich ist hierbei durch eine obere Begrenzung des Gehäuses, beispielsweise einem Deckelement, definiert. Zum Reinigen des Wassers von Schwebstoffen und anderen Verunreinigungen ist im Gehäuse ein Filterelement aufgenommen, in welchem ein Saugkanal zur Förderung von Wasser mit einem ersten oberen Ende strömungsmäßig mit einer Pumpe oder einer sonstigen Ansaugvorrichtung verbindbar ist. Gemäß der Erfindung weist das Gehäuse weist hierbei einen ersten und einen zweiten Bereich auf, die durch eine im Wesentlichen vertikal verlaufende flüssigkeitsdichte Trennwand räumlich voneinander getrennt sind. Zum Ansaugen von Wasser aus dem Aquarium in das Gehäuse ist der erste Bereich mit Ansaugöffnungen versehen, wobei das von der Pumpe über den Saugkanal angesaugte Wasser von dem ersten Bereich aus über die Trennwand hinweg in den zweiten Bereich strömt, in dem das Filterelement aufgenommen ist. Die Innenfiltereinrichtung ist dabei derart im Aquarium angeordnet, dass die Ansaugöffnungen und die Trennwand sich unterhalb des Wasserspiegels befinden.

Dem gemäß ist es eine Aufgabe der vorliegenden Erfindung, eine nur wenig Platz beanspruchende Innenfiltereinrichtung für Aquarien zum Reinigen von Wasser zu schaffen, die einen Rücklauf von Filtergut in das Wasser des Aquariums verhindert.

Diese Aufgabe wird erfindungsgemäß durch die Merkmale von Anspruch 1 gelöst.

Da sich die Trennwand wenigstens abschnittsweise über die Höhe des Filterelements hinweg erstreckt, kann bei einem Abschalten der Pumpe bzw. bei einer Entnahme der Innenfiltereinrichtung aus dem Aquarium das sich in dem zweiten Bereich befindliche ungereinigte Wasser und somit auch das in dem Filterelement enthaltene Filtergut nicht über die Trennwand hinweg strömen, und verbleibt stattdessen in erfindungsgemäßer Weise im zweiten Bereich. Hierdurch ergibt sich der Vorteil, dass das Filtergut nicht zusammen mit dem in dem zweiten Bereich enthaltenen Wasser über die Ansaugöffnungen des ersten Bereichs zurück in das Aquarium fließen kann.

Erfindungsgemäß erstreckt sich das Filterelement vom Gehäuseboden bis zum Deckenbereich des Gehäuses hin, sodass die für das Filterelement im zweiten Bereich zur Verfügung stehende Höhe in vorteilhafter Weise vollständig ausgenutzt wird.

In einer weiteren Ausführungsform der Erfindung hat es sich als besonders vorteilhaft herausgestellt, wenn sich die Trennwand bis in einen Abstand von 5 bis 15 mm an den Deckenbereich des Gehäuses heran erstreckt. Der Abstand zwischen der Trennwand und dem Deckenbereich definiert hierbei den Durchflussquerschnitt zwischen dem ersten und zweiten Bereich. Bei der Entnahme der Innenfiltereinrichtung ist der zweite Bereich somit wenigstens bis zu diesem Abstand mit Wasser gefüllt, wobei das Filterelement bei einer sich über dessen Oberseite hinaus erstreckenden Trennwand jedoch auch vollständig von Wasser umschlossen sein kann.

Gemäß der Erfindung sind die dem ersten Bereich zugeordneten Ansaugöffnungen in einer Seitenwand des Gehäuses angeordnet, wobei es jedoch auch vorgesehen sein kann, dass der Gehäuseboden ebenfalls Ansaugöffnungen aufweist. Die Ansaugöffnungen können hierbei sowohl als kreisförmige oder ovale Ausnehmungen aber auch als Schlitze ausgebildet sein, wobei die Ansaugöffnungen eine Querschnittsgröße aufweisen, die ein Ansaugen von kleineren Fischen ausschließt.

Erfindungsgemäß erstrecken sich die Ansaugöffnungen des Gehäuses im Wesentlichen über die gesamte Höhe des Filterelements hinweg, sodass in vorteilhafter Weise auch bei leistungsfähigeren Pumpen der Öffnungsquerschnitt der Ansaugöffnungen groß genug ist, um eine ausreichende Menge an Wasser anzusaugen. Weiterhin wird aufgrund der sich über die Höhe des Filterelements hinweg erstreckenden Ansaugöffnungen zu reinigendes Wasser aus unterschiedlichen Tiefen des Aquariums angesaugt.

Gemäß einer weiteren Ausführungsform der Erfindung weist das Gehäuse einen mit weiteren Ansaugöffnungen versehenen dritten Bereich zum Ansaugen von Wasser aus dem Aquarium auf, der von dem das Filterelement aufnehmenden zweiten Bereich durch eine im Wesentlichen vertikal verlaufende, flüssigkeitsdichte weitere zweite Trennwand räumlich getrennt ist. Die flüssigkeitsdichte zweite Trennwand erstreckt sich hierbei wenigstens abschnittsweise über die Höhe des Filterelements hinweg, sodass das über den dritten Bereich angesaugte Wasser über die zweite Trennwand hinweg in den zweiten Bereich strömt. Die Innenfiltereinrichtung ist hierbei derart in dem Aquarium angeordnet, dass die weiteren Ansaugöffnungen und die zweite Trennwand sich unterhalb des Wasserspiegels befinden.

Durch das Ansaugen von zu reinigendem Wasser über die Ansaugöffnungen des ersten und dritten Bereichs ergibt sich der Vorteil, dass insbesondere bei einer gegenüberliegenden Anordnung des ersten und dritten Bereichs im Gehäuse das zu reinigende Wasser aus unterschiedlichen Richtungen aus dem Aquarium angesaugt und dem zweiten Bereich von zwei Seiten her zugeführt wird. Hierdurch ergibt sich der Vorteil, dass das Filtergut sich nicht einseitig in dem Filterelement ansammelt, wodurch sich dessen Gebrauchsdauer erheblich verlängert.

Für einen gleichmäßigen Zufluss von zu reinigendem Wasser aus dem ersten und dritten in den zweiten Bereich weist die zweite Trennwand hierbei erfindungsgemäß im Wesentlichen die gleiche Höhe wie die erste Trennwand auf.

Gemäß einer weiteren Ausführungsform der Erfindung ist im Gehäuseboden eine bodenseitige, insbesondere verschließbare, Ausnehmung angeordnet, die mit dem gehäusebodenseitigen zweiten Ende des Saugkanals strömungsmäßig verbunden ist, wobei die bodenseitige Ausnehmung beispielsweise durch ein einsteckbares Verschlussmittel weitgehend wasserdicht verschlossen werden kann. Bei der Entnahme der Innenfiltereinrichtung aus dem Aquarium kann die bodenseitige Ausnehmung geöffnet werden, sodass das gereinigte Wasser über die bodenseitige Ausnehmung aus dem zweiten Bereich in das Aquarium abfließen kann. Hierdurch ist die Innenfiltereinrichtung ohne im Gehäuse enthaltenes Wasser nahezu trocken aus dem Aquarium entnehmbar.

In einer weiteren Ausführungsform der Erfindung ist in der bodenseitigen Ausnehmung ein Rückschlagventil angeordnet, das sich bei der Entnahme der Innenfiltereinrichtung aus dem Aquarium selbsttätig öffnet und das gereinigte Wasser aus dem Saugkanal abfließen lässt. Bei dem Rückschlagventil handelt es sich vorzugsweise um ein Ventil, welches beim Betrieb der Pumpe durch den erzeugten Ansaugdruck geschlossen wird und sich nur bei abgeschalteter Pumpe aufgrund des fehlenden Ansaugdrucks öffnet.

Auf dem Gehäuseboden ist erfindungsgemäß von außen her eine bodenseitige Abdeckung lösbar befestigt, die eine Ausnehmung zur Aufnahme des Rückschlagventils aufweist und strömungsmäßig mit der bodenseitigen Ausnehmung des Gehäuses verbindbar ist. Die bodenseitige Abdeckung ist vorzugsweise auf den Gehäuseboden aufsteckbar, sodass die bodenseitige Abdeckung und das darin aufgenommene Rückschlagventil zu dessen Reinigung oder Wartung in vorteilhafter Weise von dem Gehäuse entfernt werden können.

Zur Aufnahme des Rückschlagventils weist die bodenseitige Abdeckung konstruktionsbedingt einen Hohlraum auf, der insbesondere von der bodenseitigen Abdeckung und dem Gehäuseboden begrenzt wird. Um in dem Hohlraum enthaltenes Wasser aus diesem abzuführen, sind in der bodenseitigen Abdeckung Öffnungen zum Durchtritt von Wasser vorgesehen. Hierdurch wird in vorteilhafter Weise verhindert, dass nach der Entnahme der Innenfiltereinrichtung aus dem Aquarium im Hohlraum verbleibendes Wasser aus diesem tropfenweise entweicht oder beim Abnehmen der bodenseitigen Abdeckung vom Gehäuse verschüttet wird.

Das in dem zweiten Bereich aufgenommene Filterelement ist erfindungsgemäß in einem vorzugsweise korbförmigen Filtereinsatz aufgenommen, der in den zweiten Bereich einsetzbar ist. Hierdurch ergibt sich in vorteilhafter Weise die Möglichkeit, verschiedene Filtermaterialien, wie beispielsweise Kies oder ein anderes loses Filtermaterial, zu verwenden, wobei das lose Filtermaterial mit Hilfe des korbförmigen Filtereinsatzes als Ganzes aus dem zweiten Bereich entnehmbar ist.

Erfindungsgemäß kann das Filterelement aus einem geschäumten Kunststoffmaterial bestehen, welches auf einfache Weise herstellbar ist. Als besonders vorteilhaft hat sich hierbei die Verwendung von Aktivkohle als Filtermaterial für das Filterelement herausgestellt, wobei das Filterelement entweder vollständig aus Aktivkohle gebildet oder solche zumindest als Bestandteil enthalten kann.

Zur Reinigung von insbesondere großen Aquarien sind gemäß eines weiteren der Erfindung zugrunde liegenden Gedankens eine erste erfindungsgemäße Innenfiltereinrichtung und eine zweite erfindungsgemäße Innenfiltereinrichtung übereinander angeordnet, wobei das Gehäuse der ersten Innenfiltereinrichtung und das Gehäuse der zweiten Innenfiltereinrichtung lösbar aufeinander befestigbar, insbesondere steckbar sind. Der erste Saugkanal der ersten Innenfiltereinrichtung ist hierbei mit dem zweiten Saugkanal der zweiten Innenfiltereinrichtung strömungsmäßig verbindbar. Auf diese Weise ist es möglich, wenigstens zwei Innenfiltereinrichtungen übereinander anzuordnen, wobei im Gehäuseboden der unteren zweiten Innenfiltereinrichtung vorzugsweise ein Rückschlagventil angeordnet ist, das mit dem unteren zweiten Ende des zweiten Saugkanals der unteren zweiten Innenfiltereinrichtung strömungsmäßig verbunden ist. In der zuvor beschriebenen Weise übereinander angeordnete Innenfiltereinrichtungen nehmen in einem Aquarium aufgrund ihrer kompakten Bauform in vorteilhafter Weise nur wenig Platz in Anspruch und lassen sich beispielsweise gut in einer Ecke des Aquariums anordnen, wobei aufgrund der Vielzahl von Filterelementen die erfindungsgemäße Kombination aus mehreren Innenfiltereinrichtungen einen hohen Reinigungsgrad ermöglicht und zum Ansaugen von zu reinigendem Wasser nur eine Pumpe oder nur eine sonstige Ansaugvorrichtung erforderlich ist.

Zur farblichen Anpassung der Innenfiltereinrichtung an die Pflanzen und Lebewesen im Inneren des Aquariums kann es weiterhin vorgesehen sein, dass die Innenfiltereinrichtung mit einem textilen wasserdurchlässigen Bezug überzogen oder mit einer schalenförmigen Abdeckung verkleidet ist, die beispielsweise über eine Clip-Verbindung lösbar mit der Innenfiltereinrichtung verbindbar ist und Öffnungen zum Durchtritt von Wasser aufweist.

Die Erfindung wird nachfolgend mit Bezug auf die Zeichnungen anhand von bevorzugten Ausführungsformen beschrieben.

In den Zeichnungen zeigen:
- Fig. 1: eine schematische räumliche Ansicht einer erfindungsgemäßen Innenfiltereinrichtung,
- Fig. 2: eine schematische Querschnittsansicht einer unter einer Pumpe angeordneten erfindungsgemäßen Innenfiltereinrichtung, sowie
- Fig. 3: eine räumliche schematische Ansicht einer erfindungsgemäßen Anordnung einer ersten und zweiten erfindungsgemäßen Innenfiltereinrichtung.

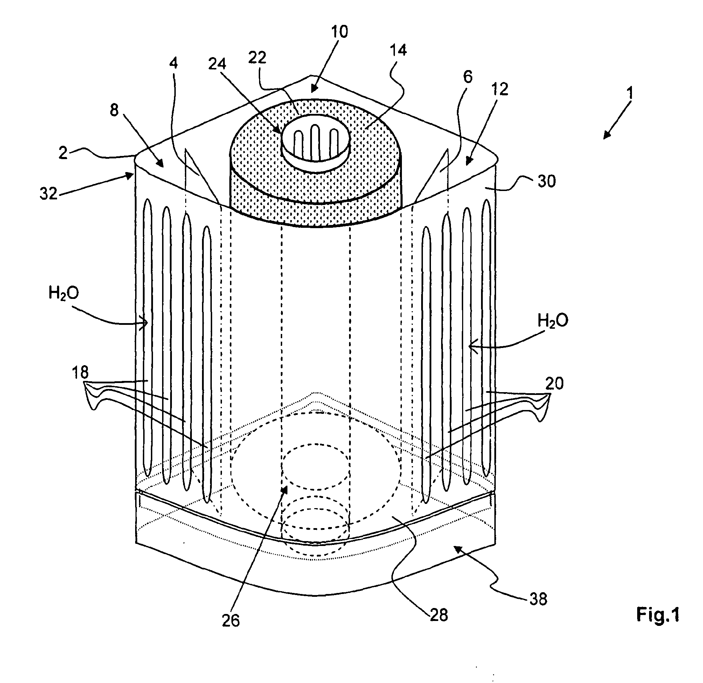

Fig. 1 zeigt eine Innenfiltereinrichtung 1 mit einem im Wesentlichen dreiecksförmigen Gehäuse 2, das durch eine erste und zweite flüssigkeitsdichte Trennwand 4, 6 in einen ersten und dritten Bereich 8, 12 zum Ansaugen von Wasser aus einem in Fig.1 nicht dargestellten Aquarium, sowie einen zweiten Bereich 10 zur Aufnahme eines zylinderförmigen Filterelements 14 unterteilt ist. Der erste bzw. dritte Bereich 8, 12 wird somit von der ersten bzw. zweiten Trennwand 4, 6 und der Gehäuseseitenwand 30 begrenzt, wobei in den dem ersten und dritten Bereich 8, 12 zugeordneten Abschnitten der Gehäuseseitenwand 30 Ansaugöffnungen 18, 20 vorgesehen sind.

Der erste und dritte Bereich 8, 12 weisen vorzugsweise die gleiche Querschnittsgröße, und die erste und zweite Trennwand 4, 6 die gleiche Höhe auf. Die in der Gehäuseseitenwand 30 des ersten und dritten Bereichs 8, 12 angeordneten Ansaugöffnungen 18, 20 erstrecken sich im Wesentlichen über die Höhe der ersten und zweiten Trennwand 4, 6.

Die erste und zweite flüssigkeitsdichte Trennwand 4, 6 ist hierbei in der Art mit der Gehäuseseitenwand 30 verbunden, so dass der erste und dritte Bereich 8, 12 räumlich von dem zweiten Bereich 10 getrennt sind und das über die Ansaugöffnungen 18, 20 des ersten und dritten Bereichs 8, 12 angesaugte Wasser nur über die erste und zweite Trennwand 4, 6 hinweg in den zweiten Bereich 10 einströmen kann. Die erste und zweite Trennwand 4, 6 erstrecken sich dabei abschnittsweise über die Höhe des im zweiten Bereich 10 aufgenommen Filterelements 14 hinweg. In dem zylinderförmigen Filterelement 14 ist ein hohlzylinderförmiger Saugkanal 22 konzentrisch angeordnet, der mit seinem oberen ersten Ende 24 strömungsmäßig mit einer in Fig.1 nicht dargestellten Pumpe oder sonstigen Ansaugvorrichtung verbindbar ist. Für die Verbindung des Saugkanals 22 der Pumpe ragt der Saugkanal 22 mit einem nicht näher beschriebenen Abschnitt über das Filterelement 14 hinaus, wohingegen der Saugkanal 22 sich nach unten durch das Filterelement 14 hindurch bis zum Gehäuseboden 28 hin erstreckt.

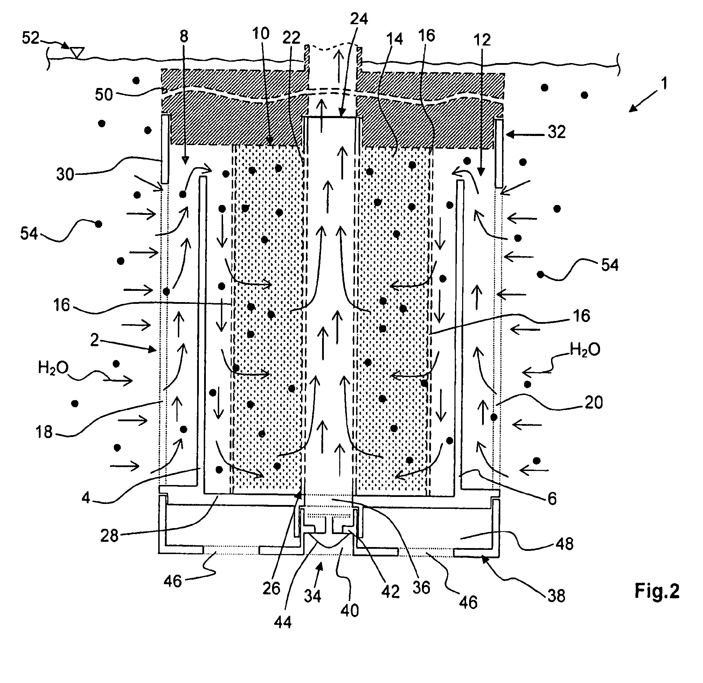

Auf das Gehäuse 2 ist von unten her eine bodenseitige Abdeckung 38 aufgesteckt, die eine in Fig.2 dargestellte Ausnehmung 36 zur Aufnahme eines Rückschlagventils 34 aufweist, welches strömungsmäßig mit einer im Gehäuseboden 28 des Gehäuses 2 angeordneten bodenseitigen Ausnehmung 40 verbunden ist. Die im Gehäuseboden 28 angeordnete bodenseitige Ausnehmung 40 steht hierbei wiederum strömungsmäßig mit dem zweiten Ende 26 des Saugkanals 22 in Verbindung, wie dies in Fig.2 gezeigt ist.

Eine Querschnittsansicht einer unterhalb einer Pumpe 50 angeordneten erfindungsgemäßen Innenfiltereinrichtung 1, bei der sich die Pumpe 50 und die Innenfiltereinrichtung 1 mit dem in einem korbförmigen Filtereinsatz 16 aufgenommenen Filterelement 14 unterhalb des Wasserspiegels 52 in einem nicht weiter dargestellten Aquarium befinden, ist im Detail in Fig. 2 dargestellt. Die Unterseite der Pumpe 50 greift hierbei nach Art einer Steckverbindung in den Deckenbereich 32 des Gehäuses 2 ein, wobei die Unterseite der Pumpe 50 den Deckenbereich 32 des Gehäuses 2 definiert, bis zu dem sich das Filterelement 14 und der Filtereinsatz 16 hin erstrecken. In der Mitte der Pumpe 50 ist eine Öffnung für die Aufnahme des ersten Endes 24 des Saugkanals 22 vorgesehen, welche den sich bis zum Deckenbereich 32 des Gehäuses 2 erstreckenden Saugkanal 22 strömungsmäßig mit der Pumpe 50 verbindet.

Beim Betrieb der Pumpe 50 wird das zu reinigende Wasser aus dem in Fig. 2 nicht weiter dargestellten Aquarium über die in der Gehäuseseitenwand 30 vorgesehenen Ansaugöffnungen 18, 20 angesaugt. Dabei strömt das zu reinigende Wasser von dem ersten bzw. dritten Bereich 8, 12 in Richtung der in Fig. 2 dargestellten Pfeile entlang der ersten bzw. zweiten Trennwand 4, 6 nach oben und über diese hinweg in den zweiten Bereich 10, wo es über das Filterelement 14 und den Saugkanal 22 von der Pumpe 50 abgesaugt wird. Der Abstand zwischen der Unterseite der Pumpe 50 bzw. der daran angrenzenden Oberseite des Filterelements 14 und den Trennwänden 4, 6 bestimmt hierbei den Durchflussquerschnitt für das Wasser von dem ersten bzw. dritten in den zweiten Bereich 8, 12, 10, wobei der Abstand vorzugsweise in einer Größenordnung von 5 bis 15 mm liegt.

Die Reinigung des Wasser von den darin enthaltenen Schwebstoffen 54 und sonstigen Verunreinigungen erfolgt beim Durchfluss des Wassers durch das Filterelement 14 in Richtung des Saugkanals 22, wobei die Schwebstoffe 54 und sonstigen Verunreinigungen sich im Filterelement 14 ansammeln und dort verbleiben. Das Wasser um das Filterelement 14 herum ist somit noch nicht gereinigt, währenddessen im Saugkanal 22 nur gereinigtes Wasser in Richtung der in Fig.2 dargestellten Pfeile zur Pumpe 50 strömt. Der Saugkanal 22 ist dabei vorzugsweise über die gesamte vom Filterelement 14 umschlossene Höhe hinweg wasserdurchlässig, beispielsweise durch die Anordnung von Öffnungen oder durch die Verwendung eines siebartigen Materials, und über die vom Filterelement 14 nicht umschlossene Höhe wasserundurchlässig gestaltet. Auf diese Weise wird erreicht, dass beim Ansaugen von Wasser dieses nur über das Filterelement 14 in den Saugkanal 22 gelangen kann. Das von der Pumpe 50 angesaugte und von dem Filterelement 14 gereinigte Wasser wird an einer anderen Stelle des Aquariums wieder in dieses zurückgeführt.

Das Filterelement 14 kann hierbei entweder aus einem einteiligen Formstück, beispielsweise aus einem geschäumten Kunststoffmaterial oder aber aus einem losen Filtermaterial, wie beispielsweise Aktivkohle, Sand oder dergleichen bestehen, welches in dem korbförmigen Filtereinsatz 16 aufgenommen ist. Der korbförmige, vorzugsweise zylinderförmige Filtereinsatz 16 weist dabei vorzugsweise einen wasserundurchlässigen Boden und um die Umfangsfläche des Filterelements 14 und den Saugkanal 22 herum umlaufende wasserdurchlässige, insbesondere siebartige Seitenwände auf.

Wie auch in Fig.1 gezeigt, ist auf das Gehäuse 2 von unten her eine bodenseitige Abdeckung 38 aufgesteckt, die die Ausnehmung 40 zur Aufnahme des Rückschlagventils 34 aufweist. Die in der bodenseitigen Abdeckung 38 angeordnete Ausnehmung 40 zur Aufnahme des Rückschlagventils 34 ist dabei mit der im Gehäuseboden 28 angeordneten bodenseitigen Ausnehmung 36 strömungsmäßig verbunden, wobei diese wiederum mit dem zweiten Ende 26 des Saugkanals 22 strömungsmäßig in Verbindung steht.

Das Rückschlagventil 34 weist ein Verschlussstück 44 auf, das infolge des Saugdrucks der Pumpe 50 gegen eine in der Ausnehmung 40 der bodenseitigen Abdeckung 38 angeordnete Schulter 42 gedrängt wird. Hierdurch wird in vorteilhafter Weise verhindert, dass beim Betrieb der Pumpe 50 über die bodenseitige Ausnehmung 36 ungereinigtes Wasser in den Saugkanal 22 und zur Pumpe 50 strömt, ohne dabei durch das Filterelement 14 gereinigt zu werden.

Bei der Entnahme der Innenfiltereinrichtung 1 aus dem Aquarium kann die Pumpe 50 abgeschaltet oder von der Innenfiltereinrichtung 1 getrennt werden, wobei sich das Rückschlagventil 34 infolge des im Saugkanal 22 fehlenden Ansaugdrucks selbsttätig öffnet, d.h. das Verschlussstück 44 liegt nicht mehr an der Schulter 42 an, sodass das im Saugkanal 22 enthaltene gereinigte Wasser direkt über die bodenseitige Ausnehmung 36 und der Ausnehmung 40 der bodenseitigen Abdeckung 38 aus dem Saugkanal 22 abfließen kann, wobei noch nicht gereinigtes Wasser aus dem zweiten Bereich 10 durch das Filterelement 14 hindurch in den Saugkanal 22 nachströmt. Da das im ersten und dritten Bereich 8, 12 enthaltene Wasser bei der Entnahme der Innenfiltereinrichtung 1 aus dem Aquarium über die Ansaugöffnung 18, 20 und das im zweiten Bereich 10 enthaltene Wasser über das Rückschlagventil 28 abfließt, ist die Innenfiltereinrichtung 1 in vorteilhafter Weise ohne darin verbleibendes Wasser aus dem Aquarium entnehmbar.

Zur Aufnahme des Rückschlagventils 34 ist der Boden der bodenseitigen Abdeckung 38 vorzugsweise beabstandet zum Gehäuseboden 28 angeordnet, wobei sich in dem zwischen dem Gehäuseboden 28 und der bodenseitigen Abdeckung 38 ergebenden Hohlraum 48 Wasser ansammeln kann. Um die Innenfiltereinrichtung 1 möglichst auch ohne im Hohlraum 48 enthaltenes Wasser aus dem Aquarium entnehmen zu können, sind auf der Unterseite der bodenseitigen Abdeckung 38 Öffnungen 46 zum Austritt von Wasser aus dem Hohlraum 48 vorgesehen. Auf diese Weise ist es möglich, die Innenfiltereinrichtung 1 in ihre Einzelteile zu zerlegen, ohne dabei auf im Gehäuse 2 oder im Hohlraum 48 vorhandenes Wasser Rücksicht nehmen zu müssen.

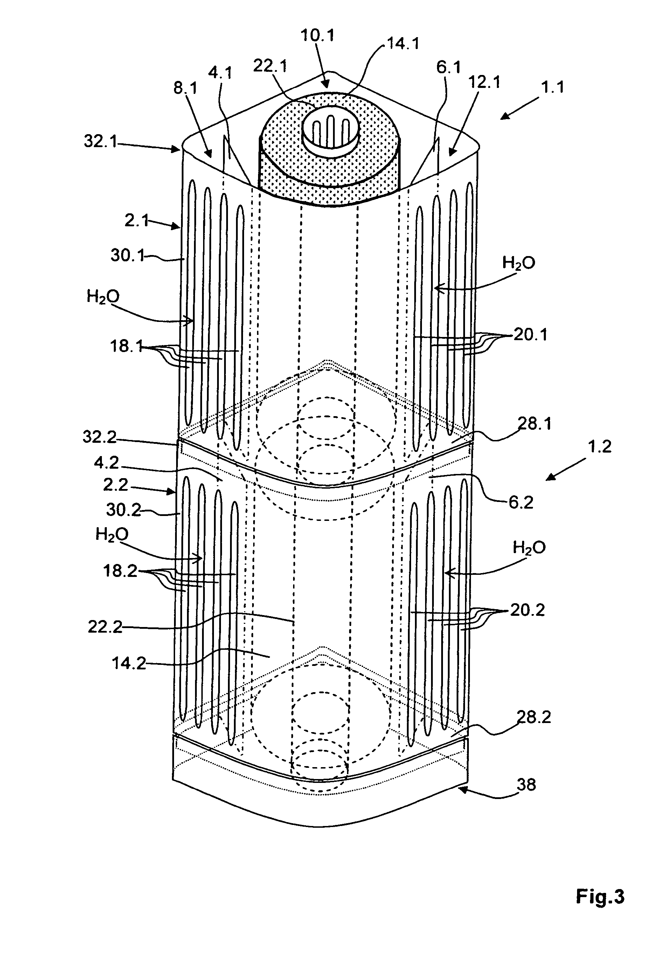

Fig. 3 zeigt die erfindungsgemäße Anordnung einer ersten und zweiten erfindungsgemäßen Innenfiltereinrichtung 1.1, 1.2, die vom Aufbau her im Wesentlichen den schon in Fig.1 und Fig.2 gezeigten Innenfiltereinrichtungen 1 entsprechen. Die obere erste Innenfiltereinrichtung 1.1 ist hierbei mit dem Gehäuseboden 28.1 auf den Deckenbereich 32.2 der unteren zweiten Innenfiltereinrichtung 1.2 aufgesteckt. Der Saugkanal 22.2 der zweiten Innenfiltereinrichtung 1.2 erstreckt sich hierbei bis zu der im Gehäuseboden 28.1 angeordneten, in Fig.3 nicht näher dargestellten bodenseitigen Ausnehmung der oberen ersten Innenfiltereinrichtung 1.1. Aufgrund der strömungsmäßigen Verbindung des unteren zweiten Endes des ersten Saugkanals 22.1 der oberen Innenfiltereinrichtung 1.1 mit dem oberen ersten Ende des zweiten Saugkanals 22.2 kann von der in Fig. 3 nicht dargestellten Pumpe oder Ansaugvorrichtung sowohl aus der unteren zweiten als auch der oberen ersten Innenfiltereinrichtung 1.2, 1.1 Wasser gleichzeitig angesaugt werden. Durch die lösbare Befestigung der ersten und zweiten Innenfiltereinrichtung 1.1, 1.2 übereinander ergibt sich der Vorteil, dass die Innenfiltereinrichtungen 1.1, 1.2 für Aquarien mit unterschiedlicher Tiefe einsetzbar sind.

Für die Herstellung der erfindungsgemäßen Kombination der ersten Innenfiltereinrichtung 1.1 mit der zweiten Innenfiltereinrichtung 1.2 wird die erste Innenfiltereinrichtung 1.1 mit ihrem Gehäuseboden 28.1 in den Deckenbereich 32.2 der zweiten Innenfiltereinrichtung 1.2 eingesteckt, wobei die bodenseitige Abdeckung 38 mit dem in Fig.3 nicht dargestellten Rückschlagventil auf das freie Ende der unteren zweiten Innenfiltereinrichtung 1.2 aufgesteckt ist. Die Saugkanäle 22.1, 22.2 werden hierbei durch das Aufeinanderstecken der Innenfiltereinrichtungen 1.1, 1.2 strömungsmäßig miteinander verbunden. Das zweite Filterelement 14.2 erstreckt sich dabei bis zum Gehäuseboden 28.1 der ersten Innenfiltereinrichtung 1.1, wobei der Gehäuseboden 28.1 der ersten Innenfiltereinrichtung 1.1 und die Trennwände 4.2, 6.2 der zweiten Innenfiltereinrichtung 1.2 bevorzugt einen Abstand zwischen 5 und 15 mm aufweisen. Für das Hinzufügen einer in Fig.3 nicht dargestellten weiteren dritten Innenfiltereinrichtung unterhalb der zweiten Innenfiltereinrichtung 1.2 muss von dieser lediglich die bodenseitige Abdeckung 38 entfernt, die zweite Innenfiltereinrichtung 1.2 in den Deckenbereich der dritten Innenfiltereinrichtung eingesteckt sowie die bodenseitige Abdeckung 38 auf das freie Ende der dritten Innenfiltereinrichtung aufgesteckt werden.

Mit Hilfe der erfindungsgemäßen Kombination der Innenfiltereinrichtungen 1.1, 1.2 ist es möglich, Wasser aus unterschiedlichen Tiefen des Aquariums zu reinigen, ohne dass es aufgrund der relativ großen Querschnittsfläche der Ansaugöffnungen 18.1, 18.2, 20.1, 20.2 zu Verwirbelungen des Wassers im Aquarium kommt. Hierbei ist es ebenfalls denkbar, für die Filterelemente 14.1, 14.2 der einzelnen Innenfiltereinrichtungen 1.1, 1.2 unterschiedliche Filtermaterialien zu verwenden.

Bei der Entnahme der Innenfiltereinrichtungen 1.1, 1.2 kann das in den zweiten Bereichen der beiden Innenfiltereinrichtungen 1.1, 1.2 enthaltende Wasser durch die strömungsmäßige Verbindung der Saugkanäle 22.1, 22.2 über das an der unteren zweiten Innenfiltereinrichtung 1.2 angeordnete sich selbsttätig öffnende Rückschlagventil nach außen hin abfließen, während das in den ersten und dritten Bereichen enthaltene Wasser über die Ansaugöffnungen 18.1, 18.2, 20.1, 20.2 entweicht.

### Liste der Bezugszeichen

- 1, 1.1, 1.2: Innenfiltereinrichtung
- 2, 2.1, 2.2: Gehäuse
- 4, 4.1: erste Trennwand
- 6, 6.1: zweite Trennwand
- 8. 8.1: erster Bereich
- 10, 10.1: zweiter Bereich
- 12, 12.1: dritter Bereich
- 14, 14.1, 14.2: Filterelement
- 16: korbförmiger Filtereinsatz
- 18, 18.1, 18.2: Ansaugöffnungen
- 20, 20.1, 20.2: Ansaugöffnungen
- 22, 22.1: Saugkanal
- 24: erstes Ende
- 26: zweites Ende
- 28, 28.1, 28.2: Gehäuseboden
- 30: Gehäuseseitenwand
- 32, 32.1, 32.2: Deckenbereich
- 34: Rückschlagventil
- 36: bodenseitige Ausnehmung
- 38: bodenseitige Abdeckung
- 40: Ausnehmung zur Aufnahme des Rückschlagventils
- 42: Schulter
- 44: Verschlussstück
- 46: Öffnung
- 48: Hohlraum
- 50: Pumpe
- 52: Wasserspiegel
- 54: Schwebstoffe

## Patentansprüche

1. Innenfiltereinrichtung für Aquarien zum Reinigen von Wasser, mit einem einen Gehäuseboden (28), einen Deckenbereich (32) sowie Ansaugöffnungen (18) umfassenden Gehäuse (2), in dem ein Filterelement (14) aufgenommen ist, welches einen Saugkanal (22) zur Förderung von Wasser aufweist, der mit einem ersten oberen Ende (24) strömungsmäßig mit einer Ansaugvorrichtung (50) verbindbar ist,
**dadurch gekennzeichnet,**
**dass** das Gehäuse (2) einen die Ansaugöffnungen (18) aufweisenden ersten Bereich (8) zum Ansaugen des Wassers aus dem Aquarium aufweist, der von einem zweiten Bereich (10) zur Aufnahme des Filterelements (14) durch eine im Wesentlichen vertikal verlaufende flüssigkeitsdichte Trennwand (4) räumlich getrennt ist, wobei die Trennwand (4) sich wenigstens abschnittsweise über die Höhe des Filterelements (14) hinweg erstreckt.

2. Innenfiltereinrichtung für Aquarien nach Anspruch 1,
**dadurch gekennzeichnet,**
**dass** sich das Filterelement (14) vom Gehäuseboden (28) aus bis zum Deckenbereich (32) erstreckt.

3. Innenfiltereinrichtung für Aquarien nach Anspruch 1 oder 2,
**dadurch gekennzeichnet,**
**dass** die Trennwand (4) sich bis in einen Abstand von 5 mm bis 15 mm an den Deckenbereich (32) des Gehäuses (2) heran erstreckt.

4. Innenfiltereinrichtung für Aquarien nach einem der vorhergehenden Ansprüche,
**dadurch gekennzeichnet,**
**dass** die Ansaugöffnungen (18) in einer Seitenwand (30) des Gehäuses (2) angeordnet sind.

5. Innenfiltereinrichtung für Aquarien nach einem der vorhergehenden Ansprüche,
**dadurch gekennzeichnet,**
**dass** die Ansaugöffnungen (18) des Gehäuses sich im Wesentlichen über die gesamte Höhe des gesamten Filterelements (14) hinweg erstrecken.

6. Innenfiltereinrichtung für Aquarien nach einem der vorhergehenden Ansprüche,
**dadurch gekennzeichnet,**
**dass** das Gehäuse (2) einen mit weiteren Ansaugöffnungen (20) versehenen dritten Bereich (12) zum Ansaugen von Wasser aus dem Aquarium aufweist, der von dem zweiten Bereich (10) durch eine im Wesentlichen vertikal verlaufende, flüssigkeitsdichte zweite Trennwand (6) räumlich getrennt ist und sich wenigstens abschnittsweise über die Höhe des Filterelements (14) hinweg erstreckt.

7. Innenfiltereinrichtung für Aquarien nach Anspruch 6,
**dadurch gekennzeichnet,**
**dass** die zweite Trennwand (6) im Wesentlichen die gleiche Höhe aufweist wie die erste Trennwand (4).

8. Innenfiltereinrichtung für Aquarien nach einem der vorhergehenden Ansprüche,
**dadurch gekennzeichnet,**
**dass** im Gehäuseboden (28) eine bodenseitige, insbesondere verschließbare Ausnehmung (36) angeordnet ist, die mit dem zweiten Ende (26) des Saugkanals (22) strömungsmäßig verbunden ist.

9. Innenfiltereinrichtung für Aquarien nach Anspruch 8,
**dadurch gekennzeichnet,**
**dass** in der bodenseitigen Ausnehmung (36) ein Rückschlagventil (34) angeordnet ist, welches sich zum Ableiten von gereinigtem Wasser aus dem Saugkanal (22) bei der Entnahme der Innenfiltereinrichtung (1) aus dem Aquarium selbsttätig öffnet.

10. Innenfiltereinrichtung für Aquarien nach Anspruch 9,
**dadurch gekennzeichnet,**
**dass** von außen her am Gehäuseboden (28) eine bodenseitige Abdeckung (38) befestigbar, insbesondere aufsteckbar, ist, die eine Ausnehmung (40) zur Aufnahme des Rückschlagventils (34) aufweist, und die strömungsmäßig mit der bodenseitigen Ausnehmung (36) des Gehäuses (2) verbindbar ist.

11. Innenfiltereinrichtung für Aquarien nach Anspruch 10,
**dadurch gekennzeichnet,**
**dass** die bodenseitige Abdeckung (38) einen Hohlraum (48) aufweist, und
**dass** in der bodenseitigen Abdeckung (38) Öffnungen (46) zum Austritt von Wasser aus dem Hohlraum (48) vorgesehen sind.

12. Innenfiltereinrichtung für Aquarien nach einem der vorhergehenden Ansprüche,
**dadurch gekennzeichnet,**
**dass** das Filterelement (14) in einem korbförmigen Filtereinsatz (16) aufgenommen ist, der in den zweiten Bereich (10) einsetzbar ist.

13. Innenfiltereinrichtung für Aquarien nach Anspruch 12,
**dadurch gekennzeichnet,**
**dass** das Filterelement (14) aus einem geschäumten Kunststoffmaterial besteht.

14. Innenfiltereinrichtung für Aquarien nach Anspruch 12,
**dadurch gekennzeichnet,**
**dass** das Filterelement (14) aus Aktivkohle besteht oder solche enthält.

15. Anordnung einer ersten und einer zweiten Innenfiltereinrichtung nach einem der vorhergehenden Ansprüche,
**dadurch gekennzeichnet,**
**dass** das Gehäuse (2.1) der ersten Innenfiltereinrichtung (1.1) und das Gehäuse (2.2) der zweiten Innenfiltereinrichtung (1.2) lösbar aufeinander befestigbar, insbesondere steckbar, sind, derart, dass der erste Saugkanal (22.1) der ersten Innenfiltereinrichtung (1.1) und der zweite Saugkanal (22.2) der zweiten Innenfiltereinrichtung (1.2) strömungsmäßig miteinander verbunden sind.

## Claims

1. Internal filter device for aquaria to clean water, with a housing base (28), a top region (32) and housing (2) comprising suction openings (18) and in which said housing a filter element (14) is contained which has a suction channel (22) to convey water and which can be connected to a first upper end (24) with a suction device (50) to allow flow
**characterised in that,**
the housing (2) has a first region (8) having the suction openings (18) to suck the water out of the aquarium which is spatially separated by an essentially vertical and watertight partition (4) from a second region (10) to contain the filter element (14), whereby the partition (4) extends at least partially above the top of the filter element (14)

2. Internal filter device for aquaria in accordance with claim 1,
**characterised in that**
the filter element (14) extends up from the housing base (28) to the top region (32).

3. Internal filter device for aquaria in accordance with claim 1 or 2,
**characterised in that**
the partition (4) extends towards the top region (32) of the housing (2) leaving a gap of 5 mm to 15 mm.

4. Internal filter device for aquaria in accordance with one of the preceding claims,
**characterised in that**
the suction openings (18) are arranged in a side wall (30) of the housing (2).

5. Internal filter device for aquaria in accordance with one of the preceding claims,
**characterised in that**
the suction openings (18) of the housing extend essentially above the overall height of the complete filter element (14).

6. Internal filter device for aquaria in accordance with one of the preceding claims,
**characterised in that**
the housing (2) has a third region (12) provided with further openings (20) to suck water out of the aquarium which region is spatially separated by an essentially vertical and watertight partition (6) from the second region (10) and extends at least partially above the top of the filter element (14).

7. Internal filter device for aquaria in accordance with claim 6,
**characterised in that**
the second partition (6) is essentially the same height as the first partition (4).

8. Internal filter device for aquaria in accordance with one of the preceding claims,
**characterised in that**
a particularly closable recess (36) is arranged in the housing base (28) and can be connected to allow flow with the second end (26) of the suction channel (22).

9. Internal filter device for aquaria in accordance with claim 8,
**characterised in that**
a non-return valve (34) is arranged in the recess (36) in the base, which valve opens automatically to allow purified water to flow out of the suction channel (22) when the internal filter device (1) is removed from the aquarium.

10. Internal filter device for aquaria in accordance with claim 9,
**characterised in that**
a cap (38) at the base can be attached from the outside, in particular fitted over the housing base (28), which cap has a recess (40) for holding the non-return valve (34) and can be connected to the recess (36) at the base of the housing (2) to allow flow.

11. Internal filter device for aquaria in accordance with claim 10,
**characterised in that**
the cap (38) at the base has a cavity (48) and that openings (46) are provided in the cap (38) at the base to allow water to drain out of the cavity (48).

12. Internal filter device for aquaria in accordance with one of the preceding claims,
**characterised in that**
the filter element (14) is held in a basket-shaped filter insert (16) which can be inserted into the second region (10).

13. Internal filter device for aquaria in accordance with claim 12,
**characterised in that**
the filter element (14) consists of a foam plastic material.

14. Internal filter device for aquaria in accordance with claim 12,
**characterised in that**
the filter element (14) consists of or contains active charcoal.

15. Arrangement of a first and a second internal filter device in accordance with one of the preceding claims,
**characterised in that**
the housing (2.1) of the first internal filter device (1.1) and the housing (2.2) of the second internal filter device (1.2) can be loosely fitted to each other, in particular plugged together, such that the first suction channel (22.1) of the first internal filter device (1.1) and the second suction channel (22.1) of the second internal filter device (1.2) can be connected to each other to allow flow.

## Revendications

1. Dispositif de filtre intérieur pour aquariums pour le nettoyage de l'eau, avec un boîtier (2) comprenant un fond de boîtier (28), une zone de plafond (32) ainsi que des orifices d'aspiration (18), boîtier dans lequel est ménagé un élément filtrant (14) qui présente un canal d'aspiration (22) pour le transport de l'eau, qui peut être relié par une première extrémité (24) supérieure à un dispositif d'aspiration (50), de manière à permettre un écoulement,
**caractérisé en ce que**
le boîtier (2) présente une première zone (8) présentant des ouvertures d'aspiration (18) pour l'aspiration de l'eau de l'aquarium, qui est séparée dans l'espace d'une seconde zone (10) pour le logement de l'élément filtrant (14) par une cloison de séparation (4) étanche au fluide et agencée sensiblement verticalement, la cloison de séparation (4) s'étendant au moins en partie au-dessus de la hauteur de l'élément filtrant (14).

2. Dispositif de filtre intérieur pour aquariums selon la revendication 1,
**caractérisé en ce que**
l'élément filtrant (14) s'étend depuis le fond du boîtier (28) jusqu'à la zone du plafond (32).

3. Dispositif de filtre intérieur pour aquariums selon la revendication 1 ou 2,
**caractérisé en ce que**
la cloison de séparation (4) s'étend jusqu'à une distance de 5 mm à 15 mm en se rapprochant de la zone du plafond (32) du boîtier (2).

4. Dispositif de filtre intérieur pour aquariums selon l'une quelconque des revendications précédentes,
**caractérisé en ce que**
les orifices d'aspiration (18) sont disposés dans une paroi latérale (30) du boîtier (2).

5. Dispositif de filtre intérieur pour aquariums selon l'une quelconque des revendications précédentes,
**caractérisé en ce que**
les orifices d'aspiration (18) du boîtier s'étendent essentiellement sur toute la hauteur de l'ensemble de l'élément filtrant (14).

6. Dispositif de filtre intérieur pour aquariums selon l'une quelconque des revendications précédentes,
**caractérisé en ce que**
le boîtier (2) présente une troisième zone (12) dotée d'autres orifices d'aspiration (20) pour l'aspiration d'eau de l'aquarium, qui est séparée dans l'espace de la seconde zone (10) par une seconde cloison de séparation (6) étanche au liquide et agencée sensiblement verticalement et s'étend au moins en partie au-dessus de la hauteur de l'élément filtrant (14).

7. Dispositif de filtre intérieur pour aquariums selon la revendication 6,
**caractérisé en ce que**
la seconde cloison de séparation (6) présente sensiblement la même hauteur que la première cloison de séparation (4).

8. Dispositif de filtre intérieur pour aquariums selon l'une quelconque des revendications précédentes,
**caractérisé en ce que**
un évidement (36) côté fond, en particulier pouvant être fermé, qui est relié avec une seconde extrémité (26) du canal d'aspiration (22), de manière à permettre l'écoulement, est disposé dans le fond du boîtier (28).

9. Dispositif de filtre intérieur pour aquariums selon la revendication 8,
**caractérisé en ce que**
dans l'évidement (36) côté fond est disposée un clapet antiretour (34), qui s'ouvre automatiquement pour la déviation de l'eau nettoyée provenant du canal d'aspiration (22) lors de l'enlèvement du dispositif de filtre intérieur (1) de l'aquarium.

10. Dispositif de filtre intérieur pour aquarium selon la revendication 9,
**caractérisé en ce que**
un revêtement (38) côté fond, peut être fixé, en particulier emboîté, par l'extérieur sur le fond du boîtier (28), lequel revêtement présente un évidement (40) pour le logement du clapet antiretour (34), et qui peut être relié à l'évidement (36) côté fond du boîtier (2), de manière à permettre l'écoulement.

11. Dispositif de filtre intérieur pour aquariums selon la revendication 10,
**caractérisé en ce que**
le revêtement (38) côté fond présente un espace creux (48) et **en ce que** des orifices (46) pour la sortie d'eau de l'espace creux (48) sont prévus dans le revêtement (38) côté fond.

12. Dispositif de filtre intérieur pour aquariums selon l'une quelconque des
revendications précédentes,
**caractérisé en ce que**
l'élément filtrant (14) est ménagé dans un élément filtrant (16) en forme de panier, qui peut être inséré dans la seconde zone (10).

13. Dispositif de filtre intérieur pour aquariums selon la revendication 12,
**caractérisé en ce que**
l'élément filtrant (14) est à base d'un matériau plastique moussé.

14. Dispositif de filtre intérieur pour aquariums selon la revendication 12,
**caractérisé en ce que**
l'élément filtrant (14) est à base de charbon actif ou en contient.

15. Agencement d'un premier et d'un second dispositif de filtre intérieur selon l'une quelconque des revendications précédentes,
**caractérisé en ce que**
le boîtier (2.1) du premier dispositif filtre intérieur (1.1) et le boîtier (2.2) du second dispositif de filtre intérieur (1.2) peuvent être fixés, en particulier emboîtés, de façon amovible l'un sur l'autre, de telle sorte que le premier canal d'aspiration (22.1) du premier dispositif de filtre intérieur (1.1) et le second canal d'aspiration (22.2) du second dispositif de filtre intérieur (1.2) sont reliés l'un à l'autre de manière à permettre l'écoulement.
